# EUROPEAN PATENT APPLICATION

(11) **EP 4 641 685 A1**
(43) Date of publication of application: **29.10.2025**
(21) Application number: 23907029.5
(22) Date of filing: 19.12.2023
(51) Int. Cl.: H01M 4/505, C01G 45/00, C01G 49/00, C01G 51/00, C01G 53/00, H01M 4/525

(54) **POSITIVE ELECTRODE ACTIVE MATERIAL FOR SECONDARY BATTERIES, AND SECONDARY BATTERY**

(30) Priority: 23.12.2022 JP 2022206532
(71) Applicant: Panasonic Energy Co., Ltd., Osaka 570-8511 (JP)
(72) Inventor: ZHANG, Jin, Kadoma-shi, Osaka 571-0057 (JP); SAITO, Motoharu, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2023/045465
(87) International publication number: WO 2024/135669

(57) **Abstract**

A positive electrode active material for secondary batteries includes a lithium metal composite oxide having a crystal structure that can be attributed to the space group Fm-3m. The lithium metal composite oxide contains at least Li, Mn, Ti, and M. The M is a positive element different from Li, Mn, and Ti. The crystallite size of the lithium metal composite oxide is in a range of 1 nm to 100 nm, or in an X-ray diffraction (XRD) profile using CuKα radiation of the lithium metal composite oxide, the half-value width of a diffraction peak attributed to the (200) plane is in a range of 0.1° to 1.8°, based on 2θ.

## Description

### [Cross Reference to Related Application]

The present disclosure claims priority with respect to the Japanese Patent Application No. 2022-206532 filed on December 23, 2022, and the entire content of the patent application is incorporated herein by reference into the present specification.

### [Technical Field]

The present disclosure relates to a positive electrode active material for secondary batteries, and a secondary battery.

### [Background Art]

Secondary batteries, especially lithium-ion secondary batteries, have high output and high energy density and are, therefore, expected as power sources for small consumer applications, power storage devices, and electric cars. As a positive electrode active material for lithium-ion secondary batteries, a composite oxide of lithium and a transition metal (e.g., cobalt) has been used. By replacing part of the cobalt with nickel, higher capacity can be achieved.

On the other hand, in recent years, in response to the request for high energy density, attention has been paid to Li-excess lithium metal composite oxides based on Li₁₊ₓMn₁₋ₓO₂ having a rock-salt structure.

Patent Literature 1 discloses a positive electrode active material including a lithium-transition metal composite oxide having a crystal structure belonging to the space group Fm-3m and represented by a composition formula Li₁₊ₓNb_{y}Me_{z}AₚO₂, where Me is a transition metal including Fe and/or Mn, 0 < x <1 , 0 < y < 0.5, 0.25 ≤ z < 1, A is an element other than Nb and Me, and 0 ≤ p ≤ 0.2, excluding Li₁₊ₚFe_{1-q}Nb_{q}O₂ where 0.15 < p ≤ 0.3, and 0 < q ≤ 0.3.

### [Citation List]

### [Patent Literature]

Patent Literature 1: Japanese Patent No. 6197029

### [Summary of Invention]

### [Technical Problem]

Patent Literature 1 can achieve high capacity by controlling the composition (i.e., adding Nb). However, the capacity improvement effect is insufficient, and further improvement is expected.

### [Solution to Problem]

In view of the above, one aspect of the present disclosure relates to
a positive electrode active material for secondary batteries, including:
a lithium metal composite oxide having a crystal structure that can be attributed to a space group Fm-3m, wherein
the lithium metal composite oxide contains at least Li, Mn, Ti, and M,
the M is a positive element different from Li, Mn, and Ti, and
a crystallite size of the lithium metal composite oxide is in a range of 1 nm to 100 nm,
   or
in an X-ray diffraction (XRD) profile using CuKα radiation of the lithium metal composite oxide, a half-value width of a diffraction peak attributed to a (200) plane is in a range of 0.1° to 1.8°, based on 2θ.

Another aspect of the present disclosure relates to a secondary battery, including: a positive electrode, a negative electrode, an electrolyte, and a separator interposed between the positive electrode and the negative electrode, wherein the positive electrode includes the above-described positive electrode active material for secondary batteries.

### [Advantageous Effects of Invention]

According to the present disclosure, it is possible to realize a secondary battery with high capacity density.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

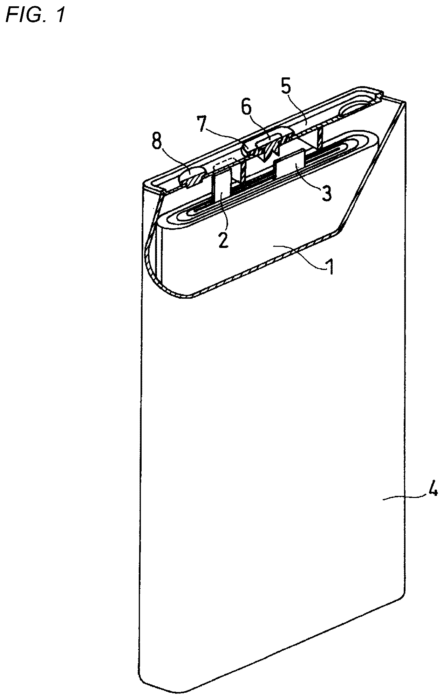

[FIG. 1] A partially cut-away schematic oblique view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of, composed of, formed of, made of, and the like."

Secondary batteries include at least nonaqueous electrolyte secondary batteries, such as lithium-ion batteries and lithium-metal secondary batteries, all-solid-state batteries using a solid electrolyte, and the like.

The positive electrode active material for secondary batteries of the present disclosure includes a lithium metal composite oxide (hereinafter, sometimes referred to as a "lithium metal composite oxide (Fm)") having a crystal structure that can be attributed to the space group Fm-3m. The lithium metal composite oxide (Fm) has a crystal structure based on a rock-salt structure belonging to the space group Fm-3m, and has a crystal structure similar to a rock-salt structure represented by NaCl, for example. In such a crystal structure, oxygen atoms can be located at the anion sites, and Li atoms and metal atoms other than Li can be irregularly located at the cation sites.

The lithium metal composite oxide (Fm) includes at least Li, Mn, Ti, and M, and the M is a positive element different from Li, Mn, and Ti.

In the lithium metal composite oxide (Fm), the major component of the metal elements other than Li is preferably Mn. The number b of Mn atoms in the lithium metal composite oxide (Fm) may be the largest among the numbers of atoms of the metals other than Li in the lithium metal composite oxide (Fm). The number of Mn atoms may be larger than the total number c of atoms of metal elements except Li and Mn. A ratio b/c of the number b of Mn atoms in the lithium metal composite oxide (Fm) to the number c of atoms of metal elements other than Li and Mn is, for example, 1 or more and 15 or less, preferably 1 or more and 12 or less, may be more than 1 and 12 or less, and may be 2 or more and 12 or less.

In addition, the lithium metal composite oxide (Fm) contains Ti. Ti acts to increase the capacity of the lithium metal composite oxide (Fm) having the above crystal structure. Although the reason for this is unclear, one possible reason is that, in the lithium metal composite oxide, Ti can be present in the form of Ti⁴⁺ in which the d orbital is empty. In that case, the highly symmetric rock-salt structure is likely to be stable, and the rock-salt structure can be stabilized even through repeated charging and discharging. When lithium metal composite oxide (Fm) contains Ti, the ratio Mn/Ti of the number of Mn atoms to the number of Ti atoms in the lithium metal composite oxide may be 4 or more, may be 5 or more, may be 6 or more, and is preferably 7 or more. The Mn/Ti may be 70 or less, may be 30 or less, and is desirably 15 or less. The Mn/Ti may be 4 or more and 70 or less, may be 5 or more and 30 or less, may be 6 or more and 15 or less, and may be 7 or more and 15 or less.

The element M, which is a positive element, may be any element other than hydrogen, and may be a metal element (including a semi-metal element). In other words, the lithium metal composite oxide (Fm) is a lithium-transition metal composite oxide that contains at least four kinds of metals. By allowing Mn, Ti and the element M to be co-present, the charge-discharge efficiency is remarkably improved. This makes it possible to achieve higher energy density.

As the element M, for example, at least one selected from the group consisting of Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er can be used.

As the element M, for example, at least one selected from the group consisting of Ge, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er may be used.

As the element M, for example, at least one selected from the group consisting of Ni, Co, Cu, Nb, Mo, Cr, Y, Zr, Ca, Mg, Ta, W, and Al may be used. As the element M, for example, at least one selected from the group consisting of Fe, Ni, Co, Cu, Nb, Mo, Cr, Y, Zr, Ca, Mg, Ta, W, and Al may be used.

As the element M, for example, at least one selected from the group consisting of Ni, Co, Nb, Cr, Zr, Ca, and Al may be used. As the element M, for example, at least one selected from the group consisting of Fe, Ni, Co, Nb, Cr, Zr, Ca, and Al may be used.

However, in order to achieve improved charge-discharge efficiency and high energy density, it is necessary for the crystal of the lithium metal composite oxide (Fm) to satisfy at least one of the following conditions (A) and (B). Both of the conditions (A) and (B) may be satisfied.

Condition (A): The crystallite size of the lithium metal composite oxide (Fm) is in the range of 1 nm to 100 nm.

Condition (B): In an X-ray diffraction (XRD) profile using CuKα radiation of the lithium metal composite oxide (Fm), the half-value width of a diffraction peak attributed to the (200) plane is in the range of 0.1° to 1.8°, based on 2θ.

When the condition (A) is satisfied, the crystallite size of the lithium metal composite oxide (Fm) is preferably 80 nm or less, more preferably 60 nm or less. The crystallite size of the lithium metal composite oxide (Fm) is preferably 4 nm or more, more preferably 5 nm or more, or 6 nm or more. The upper and lower limits of the above crystallite size can be combined in any combination. The crystallite size of the lithium metal composite oxide (Fm) may be 4 nm or more and 80 nm or less, may be 5 nm or more and 60 nm or less, and may be 6 nm or more and 60 nm or less.

A typical lithium metal composite oxide has a large crystallite size, and it is often the case where the capacity improves when it has a sufficiently developed crystal structure. On the other hand, in the small lithium metal composite oxide (Fm) having a crystallite size of 100 nm or less, the area of the grain boundaries is increased, which remarkably increases the effect of facilitating the release and absorption of lithium ions, and presumably for this reason, the capacity improves.

The crystallite size is calculated, in an X-ray diffraction (XRD) profile using CuKα radiation of the lithium metal composite oxide (Fm), from the half-value width of a diffraction peak attributed to the (200) plane, based on the Scherrer's equation. In the X-ray diffraction (XRD) profile using CuKα radiation of the lithium metal composite oxide (Fm), the half-value width of the diffraction peak attributed to the (200) plane may be in the range of 0.1° to 1.8°, based on 2θ.

When the condition (B) is satisfied, in an X-ray diffraction (XRD) profile using CuKα radiation of the lithium metal composite oxide (Fm), the half-value width of a diffraction peak attributed to the (200) plane may be 1.0° or less, may be 0.8° or less, and may be 0.5° or less, based on 2θ. The half-value width of the diffraction peak may be 0.2° or more, and may be 0.3° or more, based on 2θ. The above upper and lower limits of the half-value width may be combined in any combination.

The lithium metal composite oxide (Fm) may be a lithium-excess lithium metal composite oxide. The lithium metal composite oxide (Fm) may be based on a composite oxide of Li and Mn. The base Li- and Mn-composite oxide may be a Li-excess Li₁₊ₓMn₁₋ₓO₂ or Li₁₊ₓMn_{1-x-y}M_{y}O₂. In the Li-excess crystal structure similar to the rock-salt structure belonging to the space group Fm-3m, the capacity improvement effect produced by reducing the crystallite size to 100 nm or less is considered to be great, as compared to in the crystal structure clearly belonging to the space group Fm-3m.

The lithium metal composite oxide (Fm) may contain fluorine (F). In the above crystal structure, fluorine can replace oxygen atom in the anion site. This stabilizes the state of Li excess, and higher capacity can be obtained. In addition, by the replacement with fluorine atom, the average discharge potential is raised. Here, the state of Li excess refers to a state in which the number of Li atoms in the lithium metal composite oxide (Fm) is greater than the total number of atoms of metal elements other than Li.

In the lithium metal composite oxide (Fm), the arrangement of Li in the cation site is irregular, and the bonding state of Li is various. Therefore, the width of the voltage distribution accompanying the Li release is wide. Because of this, it may be difficult in some cases for a trail portion on the low potential side of the voltage distribution to be utilized as a capacity. However, as a result of the introduction of fluorine atom, the voltage distribution accompanying the Li release shifts to the higher potential side, and the trail portion can be easily utilized as a capacity. Thus, the available capacity is further increased.

The lithium metal composite oxide (Fm) can be expressed by, for example, a formula LiₐMn_{b}Ti_{c}M_{d}OₑF_{f}. In this case, 1 ≤ a ≤ 1.4, 0.3 ≤ b ≤ 0.9, 0 < c ≤ 0.5, 0 < d ≤ 0.25, 0 ≤ f ≤ 0.7, and 1.7 ≤ e+f ≤ 2 can be satisfied. Alternatively, 1 ≤ a ≤ 1.4, 0.5 ≤ b ≤ 0.9, 0 < c ≤ 0.4, 0 ≤ f ≤ 0.67, and 1.7 ≤ e+f ≤ 2.2 can be satisfied. The value of e+f is 2 or less in many cases, may be 1.94 or less, and may be 1.9 or less, or 1.8 or less.

As shown in the above formula, one or more of the oxygen atoms in the anion site may be replaced with fluorine atom. This stabilizes the state of Li excess (a > 1), and high capacity can be obtained. In addition, as described above, the average discharge potential is raised, and the available capacity further increases.

The lithium metal composite oxide (Fm) may be obtained by baking a mixture of raw materials of the elements constituting the lithium metal composite oxide (Fm). Baking facilitates the growth of the crystals similar to a rock-salt structure belonging to the space group Fm-3m, resulting in a lithium metal composite oxide with a large crystallite size. By performing a pulverization treatment thereafter, the crystallite size can be controlled in the range of 1 nm to 100 nm.

As the raw materials of the elements constituting the lithium metal composite oxide, an oxide of Mn, an oxide of Ti, an oxide of element M, an oxide of lithium, a lithium salt, lithium manganese oxide (LiMnO₂), lithium titanate, Li₂O, TiO₂, Mn₂O₃, and the like may be used. As a fluorine source, lithium fluoride (LiF) can be used.

Next, a detailed description will be given below of a secondary battery according to an embodiment of the present disclosure. The secondary battery includes, for example, a positive electrode, a negative electrode, an electrolyte, and a separator as described below.

### [Positive electrode]

The positive electrode includes a positive electrode current collector, and a positive electrode mixture layer formed on a surface of the positive electrode current collector and containing a positive electrode active material. As the positive electrode, the above-described positive electrode for secondary batteries is used. The positive electrode mixture layer can be formed by, for example, applying a positive electrode slurry in which a positive electrode mixture containing a positive electrode active material, a binder, and the like is dispersed in a dispersion medium, onto a surface of the positive electrode current collector, followed by drying. The applied film after drying may be rolled as necessary. The positive electrode mixture layer may be formed on one surface or both surfaces of the positive electrode current collector.

The positive electrode mixture layer contains a positive electrode active material as an essential component, and may contain a binder, a thickener, a conductive agent, a positive electrode additive, and the like, as optional components. As the binder, the thickener, and the conductive agent, known materials can be used.

The positive electrode active material includes the aforementioned lithium metal composite oxide (Fm) having a crystal structure similar to a rock-salt structure belonging to the space group Fm-3m. The lithium metal composite oxide (Fm) comprises, for example, secondary particles each formed by aggregation of a plurality of primary particles. The particle diameter of the primary particles is typically 0.01 µm to 1 µm. The average particle diameter of the lithium metal composite oxide (Fm) is, for example, 1 µm to 50 µm, preferably 2 µm to 25 µm. Here, the average particle diameter of the lithium metal composite oxide (Fm) means a median diameter (D50) at which the cumulative frequency is 50% in a volume-based particle size distribution, and is measured by a laser diffraction-type particle size distribution analyzer. A D10 diameter (diameter at which the cumulative frequency is 10% in a volume-based particle size distribution) of the lithium metal composite oxide (Fm) may be 0.6 µm or less.

The BET surface area of the composite oxide is preferably in the range of 0.01 m²/g to 15 m²/g.

The contents of the elements constituting the composite oxide can be measured using an inductively coupled plasma-atomic emission spectroscopy instrument (ICP-AES), an electron probe microanalyzer (EPMA), an energy dispersive X-ray spectroscopy instrument (EDX), or the like.

As the positive electrode active material, a mixture of the aforementioned lithium metal composite oxide having a crystal structure similar to the above rock-salt structure and a known lithium metal oxide other than the aforementioned lithium metal composite oxide may be used. Examples of the other lithium metal oxide include lithium-transition metal composite oxides, such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). Here, 0 ≤ a ≤ 1.2, 0 ≤ b ≤ 0.9, and 2.0 ≤ c ≤ 2.3. Note that the value "a" indicating the molar ratio of lithium increases or decreases during charging and discharging.

The shape and the thickness of the positive electrode current collector can be respectively selected from the shapes and the ranges corresponding to those of the negative electrode current collector. Examples of the material of the positive electrode current collector include stainless steel, aluminum, aluminum alloy, and titanium.

### [Negative electrode]

The negative electrode includes, for example, a negative electrode current collector, and may include a negative electrode active material layer supported on the negative electrode current collector. The negative electrode active material layer can be formed by, for example, applying a negative electrode slurry in which a negative electrode mixture containing a negative electrode active material, a binder, and the like is dispersed in a dispersion medium, onto a surface of the negative electrode current collector, followed by drying. The applied film after drying may be rolled as necessary. That is, the negative electrode active material may be a mixture layer. Alternatively, a lithium metal foil or a lithium alloy foil may be attached to the negative electrode current collector. The negative electrode active material layer may be formed on one surface or both surfaces of the negative electrode current collector.

The negative electrode active material layer contains a negative electrode active material as an essential component, and may contain a binder, a conductive agent, a thickener, and the like, as optional components. As the binder, the conductive agent, and the thickener, known materials can be used.

The negative electrode active material includes a material that electrochemically absorbs and releases lithium ions, lithium metal, and/or a lithium alloy. As the material that electrochemically absorbs and releases lithium ions, a carbon material, an alloy-type material, and the like are used. Examples of the carbon material include graphite, graphitizable carbon (soft carbon), and non-graphitizable carbon (hard carbon). Particularly preferred is graphite, which is stable during charging and discharging and whose irreversible capacity is small. The alloy-type material contains, for example, at least one metal capable of forming an alloy with lithium, examples of which include silicon, tin, silicon alloy, tin alloy, and a silicon compound. These may be used in a form combined with oxygen, such as silicon oxide or tin oxide.

As the alloy-type material containing silicon, for example, a silicon composite material including a lithium ion conductive phase and silicon particles dispersed in the lithium ion conductive phase can be used. As the lithium ion conductive phase, for example, a silicon oxide phase, a silicate phase and/or a carbon phase can be used. The major component (e.g., 95 to 100 mass%) of the silicon oxide phase can be silicon dioxide. Particularly preferred is a composite material constituted of a silicate phase and silicon particles dispersed in the silicate phase, in terms of its high capacity and small irreversible capacity.

The silicate phase may contain, for example, at least one selected from the group consisting of Group I and Group II elements of the long periodic table. As the Group I and Group II elements of the long-periodic table, for example, lithium (Li), potassium (K), sodium (Na), magnesium (Mg), calcium (Ca), strontium (Sr), barium (Ba) and the like can be used. Other elements, such as aluminum (Al), boron (B), lanthanum (La), phosphorus (P), zirconium (Zr), and titanium (Ti), may be contained. Particularly preferred is a lithium-containing silicate phase (hereinafter sometimes referred to as a lithium silicate phase), in terms of its small irreversible capacity, and excellent initial charge-discharge efficiency.

The lithium silicate phase is an oxide phase containing lithium (Li), silicon (Si), and oxygen (O), and may contain another element. The atomic ratio O/Si of O to Si in the lithium silicate phase is, for example, more than 2 and less than 4. The O/Si is preferably more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z} where 0 < z < 2. The symbol z preferably satisfies 0 < z < 1, and z = 1/2 is more preferable. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be constituted of, for example, a shapeless carbon (i.e., amorphous carbon) having low crystallinity. The amorphous carbon may be, for example, hard carbon, soft carbon, or otherwise.

Examples of the negative electrode current collector include a non-porous electrically conductive base material (e.g., metal foil), and a porous electrically conductive base material (e.g., mesh, net, punched sheet). Examples of the negative electrode current collector include stainless steel, nickel, nickel alloy, copper, and copper alloy.

### [Electrolyte]

The electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

For example, a liquid nonaqueous electrolyte is prepared by dissolving a salt in a nonaqueous solvent. The salt is an electrolyte salt that ionically dissociates in the electrolyte, and can include, for example, a lithium salt. The electrolyte can contain various additives. The electrolyte is usually used in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

Other examples of the nonaqueous solvent include cyclic ethers, chain ethers, nitriles such as acetonitrile, and amides such as dimethylformamide.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

These solvents may be a fluorinated solvent in which one or more of the hydrogen atoms are replaced with fluorine atom. As the fluorinated solvent, fluoroethylene carbonate (FEC) may be used.

As the lithium salt, for example, lithium salts of chlorine-containing acids (LiClO₄, LiAlCl₄, LiB₁₀Cl₁₀, etc.), lithium salts of fluorine-containing acids (LiPF₆, LiPF₂O₂, LiBF₄, LiSbF₆, LiAsF₆, LiCF₃SO₃, LiCF₃CO₂, etc.), lithium salts of fluorine-containing acid imides (LiN(FSO₂)₂, LiN(CF₃SO₂)₂, LiN(CF₃SO₂)(C₄F₉SO₂), LiN(C₂F₅SO₂)₂, etc.), lithium halides (LiCl, LiBr, LiI, etc.), and the like can be used. These lithium salts may be used singly or in combination of two or more kinds.

The concentration of the lithium salt in the electrolyte may be 1 mol/liter or more and 2 mol/liter or less, and may be 1 mol/liter or more and 1.5 mol/liter or less. By controlling the lithium salt concentration in the above range, an electrolyte having excellent ion conductivity and appropriate viscosity can be obtained. The lithium salt concentration is not limited to the above.

The electrolyte may contain any other known additives. Examples of the additives include 1,3-propanesultone, methylbenzene sulfonate, cyclohexylbenzene, biphenyl, diphenyl ether, and fluorobenzene.

### [Separator]

A separator is interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The material of the separator is preferably a polyolefin, such as polypropylene and polyethylene.

In an exemplary structure of the secondary battery, an electrode group formed by winding the positive electrode and the negative electrode with the separator interposed therebetween is housed together with a nonaqueous electrolyte in an outer case. The wound electrode group may be replaced with a different form of the electrode group, such as a stacked electrode group formed by stacking the positive electrode and the negative electrode with the separator interposed therebetween. The secondary battery may be of any type, such as a cylindrical, prismatic, coin, button, or laminate type.

FIG. 1 is a partially cut-away schematic oblique view of a prismatic secondary battery according to one embodiment of the present disclosure.

The battery includes a bottomed prismatic battery case 4, and an electrode group 1 and a nonaqueous electrolyte housed in the battery case 4. The electrode group 1 has a long belt-shaped negative electrode, a long belt-shaped positive electrode, and a separator interposed therebetween. The negative electrode current collector of the negative electrode is electrically connected, via a negative electrode lead 3, to a negative electrode terminal 6 provided on a sealing plate 5. The negative electrode terminal 6 is insulated from the sealing plate 5 by a gasket 7 made of resin. The positive electrode current collector of the positive electrode is electrically connected, via a positive electrode lead 2, to the back surface of the sealing plate 5. That is, the positive electrode is electrically connected to the battery case 4 serving as a positive electrode terminal. The periphery of the sealing plate 5 is fitted into the open end of the battery case 4, and the fitted portion is laser welded. The sealing plate 5 has an injection hole for nonaqueous electrolyte, which is closed with a sealing plug 8 after electrolyte injection.

The structure of the secondary battery may be of a cylindrical shape, a coin shape, a button shape or the like that includes a battery case made of metal, and may be of a laminate type that includes a battery case made of a laminate sheet which is a laminate of a barrier layer and a resin sheet. In the present disclosure, the type, shape, and the like of the secondary battery are not particularly limited.

The present disclosure will be specifically described below with reference to Examples and Comparative Examples. It is to be noted, however, that the present disclosure is not limited to the following Examples.

### <Examples (A series)>

### [Production of positive electrode]

Manganese oxide (Mn₂O₃), lithium carbonate (Li₂CO₃), titanium oxide (TiO₂), and an oxide of element M (Fe₂O₃, CoO, ZrO₂, Cr₂O₃, Al₂O₃, CaO, NiO, Nb₂O₅) were mixed in a predetermined mass ratio that gives a lithium metal composite oxide having a composition as shown in Table 1. The mixture was baked at 950 °C for 10 hours, to obtain a lithium metal composite oxide.

The sintered lithium metal composite oxide was analyzed by ICP emission spectrometry, to identify the composition. In addition, the oxygen content was evaluated using an oxygen/nitrogen analyzer (EMGA-920 available from HORIBA, Ltd.). The result found that the oxygen content in the sintered lithium metal composite oxide decreased from that at preparation. In the table, m means a fluctuation from the theoretical value and can be a positive or negative numerical value.

The sintered lithium metal composite oxide was pulverized under various conditions in a planetary ball mill. The changed conditions were the rotational speed and the processing time. For example, in the case of a lithium metal composite oxide of a battery A1, the lithium metal composite oxide having a predetermined composition was obtained by placing the sintered lithium metal composite oxide in a planetary ball mill (Premium-Line P7 available from Fritsch Co., Ltd., rotational speed: 300 rpm, container: 45 mL, ball: Zr ball of ϕ3 mm), to be processed in an Ar atmosphere at room temperature for 12 hours (12 cycles, each cycle consisting of operation for 1 hour and rest for 10 minutes thereafter).

With respect to the obtained lithium metal composite oxide, measurement and analysis of an X-ray diffraction pattern were performed with a powder X-ray diffractometer using CuKα radiation. The result confirmed, from the number of XRD peaks and the peak positions, that a lithium metal composite oxide (Fm) having a rock-salt-based crystal structure belonging to the space group Fm-3m was formed. In addition, the half-value width of a diffraction peak belonging to the (200) plane of the lithium metal composite oxide (Fm) was determined. From the half-value width, the crystallite size was calculated from the Scherrer's formula.

The resultant lithium metal composite oxide (Fm), acetylene black, and polyvinylidene fluoride were mixed in a solid content mass ratio of 7:2:1, and N-methyl-2-pyrrolidone (NMP) was used as a dispersion medium, to prepare a positive electrode slurry. Next, the positive electrode slurry was applied onto a positive electrode current collector made of aluminum foil, and the applied film was dried and compressed, and then, cut into a predetermined electrode size, to obtain a positive electrode.

### [Preparation of electrolyte]

To a mixed solvent of ethylene carbonate (EC), ethyl methyl carbonate (EMC), and dimethyl carbonate (DMC) mixed in a predetermined volume ratio, LiPF₆ was added as a lithium salt, to prepare a nonaqueous electrolyte.

### [Fabrication of test cell]

A test cell was fabricated using the above positive electrode and a negative counter electrode made of lithium metal foil. The above positive electrode and negative counter electrode were placed opposite each other with a separator therebetween, to form an electrode body, and the electrode body was housed in a coin-shaped outer can. After injection of the electrolyte into the outer can, the outer can was sealed. Coin-shaped test secondary batteries (A series) were thus obtained.

### <Comparative Examples (B Series)>

In the production of a positive electrode, manganese oxide (Mn₂O₃), lithium carbonate (Li₂CO₃), titanium oxide (TiO₂), and an oxide of element M (Fe₂O₃, CoO, ZrO₂, NiO, Nb₂O₅) were mixed in a predetermined mass ratio that gives a lithium metal composite oxide having a composition as shown in Table 2. The mixture was baked at 950 °C for 10 hours, to obtain a lithium metal composite oxide. The sintered lithium metal composite oxide was pulverized in a mortar or a planetary ball mill, under various conditions. Except for using the obtained lithium metal composite oxide, in the same manner as in the Examples (A Series), coin-shaped test secondary batteries (B Series) were obtained.

### [Evaluation]

### (Initial discharge capacity)

The secondary batteries were subjected to, in a room temperature environment, a constant-current charging performed at a current of 0.1C until the battery voltage reached 4.95 V, to determine a CC charge capacity. This was followed by a constant-voltage charging performed at a constant voltage of 4.95 V until the current reached 0.01 C, to determine a CC-CV charge capacity. Thereafter, the batteries were left to rest for 20 minutes, and then, subjected to a constant-current discharging performed at a constant current of 0.1C or 0.05C until the battery voltage reached 2.5 V, to measure a 0.1C discharge capacity and a 0.05C discharge capacity. The charge capacities and the discharge capacities, each per mass of the positive electrode active material (lithium metal composite oxide), and a charge-discharge efficiency expressed as a percentage obtained by dividing the 0.05C discharge capacity by the CC-CV charge capacity are shown in Tables 1 and 2.

In Tables 1 and 2, for the A series of Examples and the B series of Comparative Examples, a half-value with (full width at half maximum, FWHM) of the XRD diffraction peak belonging to the (200) plane and the crystallite size (nm) are also shown. The numerical value in the parentheses indicate the variation of the smallest digit. For example, 1.74(3) means that this value is within the range of 1.71 to 1.77.

**[Table 1]**

| | A series | efficiency | charge capacity (mAh/g) | | discharge capacity (mAh/g) | | FWHM | crystallite size |
|---|---|---|---|---|---|---|---|---|
| | composition | (%) | CC | CC-CV | 0.1C | 0.05C | (°) | (nm) |
| A1 | Li_{1.22}Mn_{0.61}Ti_{0.05}Fe_{0.12}O_{1.8+m} | 74.5 | 313 | 313 | 224 | 233 | 1.74(3) | 5.13(8) |
| A2 | Li_{1.22}Mn_{0.61}Ti_{0.1}Fe_{0.075}O_{1.83+m} | 72.6 | 302 | 302 | 211 | 219 | 1.61(3) | 5.56(9) |
| A3 | Li_{1.22}Mn_{0.61}Ti_{0.125}Fe_{0.05}O_{1.84+m} | 72.2 | 299 | 299 | 208 | 216 | 0.817(18) | 10.9(2) |
| A4 | Li_{1.22}Mn_{0.61}Ti_{0.175}Co_{0.05}O_{1.92+m} | 76.9 | 295 | 325 | 241 | 250 | 0.70(3) | 12.8(5) |
| A5 | Li_{1.22}Mn_{0.61}Ti_{0.175}Co_{0.1}O_{1.97+m} | 77.9 | 277 | 303 | 229 | 236 | 0.73(2) | 12.2(4) |
| A6 | Li_{1.2}Mn_{0.65}Ti_{0.15}Co_{0.05}O_{1.92+m} | 82.7 | 291 | 324 | 260 | 268 | 2.07(9) | 4.31(18) |
| A7 | Li_{1.25}Mn_{0.65}Ti_{0.15}Co_{0.05}O_{1.95+m} | 78.8 | 299 | 326 | 248 | 257 | 0.69(2) | 13.0(4) |
| A8 | Li_{1.22}Mn_{0.61}Ti_{0.125}Co_{0.05}O_{1.82+m} | 72.4 | 302 | 337 | 230 | 244 | 0.68(2) | 13.1(4) |
| A9 | Li_{1.22}Mn_{0.61}Ti_{0.15}Co_{0.05}O_{1.87+m} | 78.4 | 302 | 329 | 247 | 258 | 0.60(2) | 14.9(5) |
| A10 | Li_{1.25}Mn_{0.61}Ti_{0.175}Co_{0.05}O_{1.94+m} | 75.9 | 300 | 336 | 237 | 255 | 0.51(3) | 17.6(10) |
| A11 | Li_{1.25}Mn_{0.65}Ti_{0.175}Co_{0.05}O₂₊ₘ | 77.2 | 289 | 316 | 234 | 244 | 0.83(3) | 10.8(4) |
| A12 | Li_{1.25}Mn_{0.65}Ti_{0.175}Co_{0.05}O_{2.02+m} | 77.9 | 287 | 312 | 235 | 243 | 0.43(15) | 20.8(7) |
| A13 | Li_{1.22}Mn_{0.61}Ti_{0.175}Co_{0.05}O_{1.94+m} | 79.2 | 299 | 332 | 252 | 263 | 1.66(1) | 5.32(18) |
| A14 | Li_{1.22}Mn_{0.61}Ti_{0.05}Zr_{0.125}O_{1.87+m} | 79.1 | 236 | 273 | 206 | 216 | 0.254(3) | 35.2(5) |
| A15 | Li_{1.22}Mn_{0.61}Ti_{0.088}Zr_{0.088}O_{1.87+m} | 83.9 | 254 | 292 | 234 | 245 | 0.135(9) | 66.1(43) |
| A16 | Li_{1.22}Mn_{0.61}Ti_{0.125}Zr_{0.05}O_{1.87+m} | 71.5 | 304 | 347 | 237 | 248 | 0.094(6) | 95.1(58) |
| A17 | Li_{1.22}Mn_{0.61}Ti_{0.125}Cr_{0.05}O_{1.85+m} | 73.3 | 319 | 345 | 241 | 253 | 0.74(2) | 12.0(3) |
| A18 | Li_{1.22}Mn_{0.61}Ti_{0.15}Cr_{0.025}O_{1.86+m} | 73.3 | 316 | 345 | 239 | 253 | 0.91(2) | 9.8(2) |
| A19 | Li_{1.22}Mn_{0.61}Ti_{0.125}Al_{0.05}O_{1.85+m} | 78.2 | 289 | 330 | 240 | 258 | 0.84(2) | 10.7(3) |
| A20 | Li_{1.22}Mn_{0.61}Ti_{0.125}Ca_{0.05}O_{1.82+m} | 72.1 | 267 | 319 | 216 | 230 | 0.405(16) | 22.1(9) |
| A21 | Li_{1.22}Mn_{0.61}Ti_{0.175}Ni_{0.05}O_{1.92+m} | 76.3 | 297 | 334 | 242 | 255 | 0.71(2) | 12.9(3) |
| A22 | Li_{1.22}Mn_{0.61}Ti_{0.125}Ni_{0.05}O_{1.82+m} | 72.0 | 313 | 343 | 232 | 247 | 0.68(3) | 13.9(3) |
| A23 | Li_{1.22}Mn_{0.61}Ti_{0.175}Nb_{0.05}O₂₊ₘ | 78.6 | 273 | 308 | 231 | 242 | 0.47(3) | 19.1(11) |
| A24 | Li_{1.22}Mn_{0.61}Ti_{0.125}Nb_{0.05}O_{1.9+m} | 80.1 | 297 | 327 | 251 | 262 | 0.82(5) | 11.2(12) |

**[Table 2]**

| | B series | efficiency | charge capacity (mAh/g) | | discharge capacity (mAh/g) | | FWHM | cry stallite size |
|---|---|---|---|---|---|---|---|---|
| | composition | (%) | CC | CC-CV | 0.1C | 0.05C | (°) | (nm) |
| B1 | Li_{1.04}Mn_{0.78}Ti_{0.18}O_{2.06+m} | 28.8 | 6 | 111 | 23 | 32 | 0.086(10) | 103.9(12) |
| B2 | Li_{1.04}Mn_{0.77}Ti_{0.2}O_{2.07+m} | 33.3 | 7 | 147 | 38 | 49 | 0.0814(11) | 109.8(15) |
| B3 | Li_{1.22}Mn_{0.61}Ti_{0.175}Co_{0.05}O_{1.92+m} | 42.6 | 13 | 122 | 42 | 52 | 0.079(17) | 113.5(11) |
| B4 | Li_{1.22}Mn_{0.61}Ti_{0.125}Ni_{0.05}O_{1.82+m} | 30.4 | 15 | 125 | 27 | 38 | 0.0763(12) | 111.4(9) |
| B5 | Li_{1.22}Mn_{0.61}Ni_{0.175}O_{1.7+m} | 54.9 | 287 | 326 | 166 | 179 | 2.02(15) | 4.4(3) |
| B6 | Li_{1.0}Mn_{0.75}Co_{0.25}O_{1.875+m} | 63.9 | 154 | 194 | 118 | 124 | 1.60(5) | 5.99(17) |
| B7 | Li_{1.28}Mn_{0.38}Nb_{0.19}O₂₊ₘ | 56.0 | 281 | 332 | 160 | 186 | 1.06(2) | 8.7(5) |
| B8 | Li_{1.12}Mn_{0.74}Ti_{0.15}O_{1.96+m} | 65.5 | 288 | 328 | 208 | 215 | 1.02(14) | 8.8(16) |
| B9 | Li_{1.29}Mn_{0.51}Ti_{0.2}O_{1.81+m} | 58.6 | 319 | 360 | 190 | 211 | 1.3(3) | 7.2(15) |

As would be understood from Tables 1 and 2, when the lithium metal composite oxide contains Mn, Ti, and M and satisfies the condition A or the condition B, the charge-discharge efficiency is significantly improved.

### [Industrial Applicability]

With the positive electrode active material for secondary batteries according to the present disclosure, it is possible to provide a secondary battery having high energy density. The secondary battery according to the present disclosure is useful as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A positive electrode active material for secondary batteries, comprising:
a lithium metal composite oxide having a crystal structure that can be attributed to a space group Fm-3m, wherein
the lithium metal composite oxide contains at least Li, Mn, Ti, and M,
the M is a positive element different from Li, Mn, and Ti, and
a crystallite size of the lithium metal composite oxide is in a range of 1 nm to 100 nm,
or
in an X-ray diffraction (XRD) profile using CuKα radiation of the lithium metal composite oxide, a half-value width of a diffraction peak attributed to a (200) plane is in a range of 0.1° to 1.8°, based on 2θ.

2. The positive electrode active material for secondary batteries according to claim 1, wherein the M includes at least one selected from the group consisting of Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

3. The positive electrode active material for secondary batteries according to claim 1, wherein the M includes at least one selected from the group consisting of Ge, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

4. The positive electrode active material for secondary batteries according to any one of claims 1 to 3, wherein the lithium metal composite oxide is represented by a composition formula LiₐMn_{b}Ti_{c}M_{d}OₑF_{f},
where 1 ≤ a ≤ 1.4, 0.3 ≤ b ≤ 0.9, 0 < c ≤ 0.5, 0 < d ≤ 0.25, 0 ≤ f ≤ 0.7, and 1.7 ≤ e+f ≤ 2.2.

5. The positive electrode active material for secondary batteries according to any one of claims 1 to 3, wherein the crystallite size of the lithium metal composite oxide is 80 nm or less.

6. The positive electrode active material for secondary batteries according to any one of claims 1 to 3, wherein the crystallite size of the lithium metal composite oxide is 60 nm or less.

7. The positive electrode active material for secondary batteries according to any one of claims 1 to 3, wherein a ratio b/c of the number b of Mn atoms to the number c of atoms of metal elements other than Li and Mn in the lithium metal composite oxide is 1 or more and 15 or less.

8. The positive electrode active material for secondary batteries according to any one of claims 1 to 3, wherein the lithium metal composite oxide contains fluorine.

9. The positive electrode active material for secondary batteries according to any one of claims 1 to 3, wherein the lithium metal composite oxide is a lithium-excess lithium metal composite oxide.

10. A secondary battery, comprising:
a positive electrode, a negative electrode, an electrolyte, and a separator interposed between the positive electrode and the negative electrode, wherein
the positive electrode includes the positive electrode active material for secondary batteries according to any one of claims 1 to 3.
